# EUROPEAN PATENT APPLICATION

(11) **EP 3 817 395 A1**
(43) Date of publication of application: **05.05.2021**
(21) Application number: 20173607.1
(22) Date of filing: 08.05.2020
(51) Int. Cl.: H04N 21/488, G10L 15/26

(54) **VIDEO RECORDING METHOD AND APPARATUS, DEVICE, AND READABLE STORAGE MEDIUM**

(30) Priority: 30.10.2019 CN 201911047011
(71) Applicant: Beijing Xiaomi Mobile Software Co., Ltd., Beijing 100085 (CN)
(72) Inventor: WANG, Qian, Beijing 100085 (CN); ZHAO, Yu, Beijing 100085 (CN); DENG, JiaKang, Beijing 100085 (CN)
(74) Representative: dompatent von Kreisler Selting Werner - Partnerschaft von Patent- und Rechtsanwälten mbB

(57) **Abstract**

Embodiments of the present disclosure provide a video recording method and apparatus, and a readable storage medium. The video recording method includes: receiving a video recording triggering signal, the video recording triggering signal being configured to trigger a video recording operation; collecting video image frames and speech data according to the video recording triggering signal; determining a timestamp range of the video image frames corresponding to the collected speech data in the video recording operation; performing text recognition on the speech data to obtain subtitle content of a recorded video within the timestamp range; and generating a target video according to the video image frames, the speech data and the subtitle content.

## Description

### TECHNICAL FIELD

The present disclosure relates to the field of computer technology, and more particularly to a video recording method and apparatus, a device, and a readable storage medium.

### BACKGROUND

Generally, video image frames may be collected through a camera of a terminal, and speech content may be collected through a microphone of the terminal in a video recording process. After the collection is completed, a video stream may be generated based on the collected video image frames, and an audio stream may be generated based on the collected speech content. The video stream and the audio stream may be combined to obtain a complete video.

### SUMMARY

Embodiments of the present disclosure provide a video recording method and apparatus, a device, and a readable storage medium. The technical solutions are as follows.

According to one aspect of the present disclosure, a video recording method is provided. The method includes:
receiving a video recording triggering signal, the video recording triggering signal being configured to trigger a video recording operation;
collecting video image frames and speech data according to the video recording triggering signal;
determining a timestamp range of the video image frames corresponding to the collected speech data in the video recording operation;
performing text recognition on the speech data to obtain subtitle content of a recorded video within the timestamp range; and
generating a target video according to the video image frames, the speech data and the subtitle content.

Optionally, performing the text recognition on the speech data to obtain the subtitle content of the recorded video within the timestamp range includes:
performing the text recognition on the speech data to obtain corresponding text content; and
segmenting the text content by performing semantic recognition on the text content to obtain the subtitle content.

Optionally, segmenting the text content by performing the semantic recognition on the text content to obtain the subtitle content includes:
segmenting the text content by performing the semantic recognition on the text content to obtain at least one text segment as the subtitle content; and
adding a punctuation mark to the at least one text segment by performing tone recognition on the speech data.

Optionally, after segmenting the text content by performing the semantic recognition on the text content to obtain the at least one text segment, the method further includes:
adding a display element corresponding to a recognized scene to the at least one text segment by performing scene recognition on the speech data.

Optionally, after generating the target video according to the video image frames, the speech data and the subtitle content, the method further includes:
displaying a preview interface, wherein the preview interface is configured to play a preview video corresponding to the target video, and the subtitle content is displayed on the video image frames in an overlapping manner when the preview video is played to the video image frames within the timestamp range.

Optionally, the preview interface further includes a subtitle editing control; and
the method further includes:
receiving a selection operation on the subtitle editing control;
displaying a subtitle editing area and a subtitle confirmation control according to the selection operation, wherein the subtitle editing area displays a subtitle editing sub-area corresponding to at least one video segment corresponding to the preview video, and subtitle content corresponding to the video segment is edited in the subtitle editing sub-area; and
updating the target video according to the subtitle content in the subtitle editing area when a triggering operation on the subtitle confirmation control is received.

Optionally, collecting the video image frames and the speech data according to the video recording triggering signal includes:
collecting the video image frames through a camera and collecting the speech data through a microphone according to the video recording triggering signal.

Optionally, collecting the video image frames and the speech data according to the video recording triggering signal includes:
acquiring display content of a terminal display screen as the video image frames according to the video recording triggering signal; and
acquiring audio playing content corresponding to the display content as the speech data.

Optionally, before receiving the video recording triggering signal, the method further includes:
receiving a speech subtitle enabling signal, the speech subtitle enabling signal being configured to enable a function of generating the subtitle content for the recorded video.

According to another aspect of the present disclosure, a video recording apparatus is provided. The apparatus includes:
a receiving module configured to receive a video recording triggering signal, the video recording triggering signal being configured to trigger a video recording operation;
a collecting module configured to collect video image frames and speech data according to the video recording triggering signal;
a determining module configured to determine a timestamp range of the video image frames corresponding to the collected speech data in the video recording operation;
a recognizing module configured to perform text recognition on the speech data to obtain subtitle content of a recorded video within the timestamp range; and
a generating module configured to generate a target video according to the video image frames, the speech data and the subtitle content.

Optionally, the recognizing module is further configured to perform the text recognition on the speech data to obtain corresponding text content, and to segment the text content by performing semantic recognition on the text content to obtain the subtitle content.

Optionally, the recognizing module is further configured to segment the text content by performing the semantic recognition on the text content to obtain at least one text segment as the subtitle content, and to add a punctuation mark to the at least one text segment by performing tone recognition on the speech data.

Optionally, the recognizing module is further configured to add a display element corresponding to a recognized scene to the at least one text segment by performing scene recognition on the speech data.

Optionally, the apparatus further includes:
a displaying module configured to display a preview interface, wherein the preview interface is configured to play a preview video corresponding to the target video, and the subtitle content is displayed on the video image frames in an overlapping manner when the preview video is played to the video image frames within the timestamp range.

Optionally, the preview interface further includes a subtitle editing control;
the receiving module is further configured to receive a selection operation on the subtitle editing control;
the displaying module is further configured to display a subtitle editing area and a subtitle confirmation control according to the selection operation, wherein the subtitle editing area displays a subtitle editing sub-area corresponding to at least one video segment corresponding to the preview video, and subtitle content corresponding to the video segment is edited in the subtitle editing sub-area; and
the receiving module is further configured to update the target video according to the subtitle content in the subtitle editing area when a triggering operation on the subtitle confirmation control is received.

Optionally, the collecting module is further configured to collect the video image frames through a camera and collect the speech data through a microphone according to the video recording triggering signal.

Optionally, the collecting module is further configured to acquire display content of a terminal display screen as the video image frames according to the video recording triggering signal, and acquire audio playing content corresponding to the display content as the speech data.

Optionally, the receiving module is further configured to receive a speech subtitle enabling signal, the speech subtitle enabling signal being configured to enable a function of generating the subtitle content for the recorded video.

According to another aspect of the present disclosure, there is provided a computer device, including a processor and a memory, wherein the memory stores at least one instruction which is loaded and executed by the processor to implement the video recording method provided in any one of the above embodiments of the present disclosure.

According to yet another aspect of the present disclosure, there is provided a computer-readable storage medium, wherein the storage medium stores at least one instruction which is loaded and executed by a processor to implement the video recording method provided in any one of the above embodiments of the present disclosure.

According to still another aspect of the present disclosure, there is provided a computer program product. When the computer program product runs on a computer, the computer is caused to execute the video recording method provided in any one of the above embodiments of the present disclosure.

The technical solutions provided by the present disclosure may include the following benefits.

In the video recording operation, the subtitle content corresponding to the speech data is obtained by recognizing the speech data in real time, and is displayed as subtitles within the timestamp range corresponding to the speech data, so that a problem of a tedious subtitle generation process caused by manually entering of the subtitle content is avoided, thereby improving subtitle generation efficiency.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a flowchart of a video recording method provided by some embodiments of the present disclosure;
FIG. 2 is a flowchart of a video recording method provided by some embodiments of the present disclosure;
FIG. 3 is a flowchart of a video recording method provided by some embodiments of the present disclosure;
FIG. 4 is a schematic diagram of a speech subtitle enabling process based on the embodiments shown in FIG. 3;
FIG. 5 is a schematic diagram of a subtitle editing process based on the embodiments shown in FIG. 3;
FIG. 6 is a structural block diagram of a video recording apparatus provided by some embodiments of the present disclosure;
FIG. 7 is a structural block diagram of another video recording apparatus provided by some embodiments of the present disclosure; and
FIG. 8 is a schematic structural diagram of a terminal provided by some embodiments of the present disclosure.

### DETAILED DESCRIPTION

Exemplary embodiments will be described in detail herein, examples of which are illustrated in the accompanying drawings. The following description refers to the accompanying drawings in which the same numbers in different drawings represent the same or similar elements unless otherwise indicated. The implementations set forth in the following exemplary embodiments do not represent all implementations consistent with the present disclosure. Rather, they are merely examples of devices and methods consistent with certain aspects of the present disclosure as detailed in the appended claims.

Generally, video post software is employed to add subtitle content to a video. For example, after the video is imported into the video post software, a subtitle adding function is selected, and the subtitle content is edited by manually entering in a subtitle adding interface of the video and then is added to the video. However, in the subtitle adding process, it is required to manually recognize a timeline location corresponding to each subtitle and manually enter a subtitle content corresponding to speech content. Thus, this process consumes a lot of human resources and time resources. In addition, it is prone to cause a problem of unsynchronized audio and video when the timeline location corresponding to the subtitle is determined manually, resulting in a poorer subtitle adding effect.

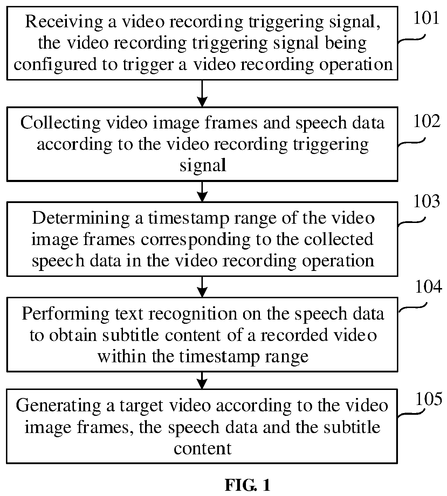

Some embodiments of the present disclosure provide a video recording method. FIG. 1 is a flowchart of a video recording method provided by some embodiments of the present disclosure, and takes an example in which the method is applied to a terminal for illustration. As shown in FIG. 1, the method includes the following steps.

In step 101, a video recording triggering signal is received, wherein the video recording triggering signal is configured to trigger a video recording operation.

Optionally, a manner for receiving video recording triggering signal includes at least one of the followings.

In a first manner, camera software (the camera software may be implemented as the camera software built-in a terminal operating system, or as third-party software installed in the terminal) is installed in the terminal, and has a corresponding video recording function. In a video recording interface corresponding to the video recording function, the video recording triggering signal is generated after a shooting control is selected and triggered. Video image frames are collected through the terminal camera, and speech data is collected through a terminal microphone according to the video recording triggering signal, so that a target video is generated.

Optionally, the video recording interface and a photo shooting interface of the camera software may be implemented as the same interface, and different functions may be implemented according to different operation modes of the shooting control. For example, a photo shooting function is enabled when the shooting control is clicked; and the video recording function is enabled when the shooting control is pressed for a certain predetermined period of time (this may also be referred to as the shooting control is "long pressed").

In a second manner, the terminal is provided with a screen recording function (the screen recording function may be provided in the terminal operating system or provided by third-party software installed in the terminal). The screen recording function corresponds to a screen recording control. When a selection operation on the screen recording control is received, the screen recording function is correspondingly enabled and triggered. That is, when the selection operation on the screen recording control is received, the video recording triggering signal is generated, and content displayed in a terminal display screen is recorded according to the video recording triggering signal.

In step 102, video image frames and speech data are collected according to the video recording triggering signal.

Optionally, when the video recording triggering signal is a signal triggered in the camera software, the video image frames are collected through a camera and the speech data is collected through a microphone according to the video recording triggering signal.

Optionally, the camera may be that built in the terminal or externally connected to the terminal. Illustratively, the camera is an external camera connected through a data cable or via short-range wireless transmission technology (such as Bluetooth, Zigbee or wireless local area network technology). Optionally, the microphone may be built in the terminal or externally connected to the terminal. For example, the microphone may be implemented as a microphone on a headset connected to the terminal.

Optionally, when the video recording triggering signal is a signal triggered by the screen recording function, the display content in the terminal display screen is acquired as the video image frames according to the video recording triggering signal, and audio playing content corresponding to the display content is acquired as the speech data. Optionally, the speech data may be a signal acquired through the microphone, however, the actual implementation is not limited to the embodiments of the present disclosure.

In step 103, a timestamp range of the video image frames corresponding to a duration of speech covered by the collected speech data is determined in the video recording operation.

Optionally, a manner for determining the timestamp includes at least one of the followings.

In a first manner, in the video recording operation of the target video, the speech data is continuously recognized. A first timestamp of the video image frame corresponding to an appearance time of the speech data is recorded when the speech data is recognized. A second timestamp of the video image frame corresponding to an end time of the speech data is recorded when the speech data ends. A time period between the first timestamp and the second timestamp serves as the timestamp range corresponding to the speech data.

In a second manner, in the video recording operation of the target video, the speech data is continuously recognized. A system clock time corresponding to an appearance time of the speech data is recorded when the speech data is recognized. Another system clock time corresponding to an end time of the speech data is recorded when the speech data ends. The timestamp range is determined according to a corresponding relationship between the system clock times and the image video frames.

In step 104, text recognition is performed on the speech data to obtain subtitle content of a recorded video within the timestamp range. The term "text recognition" may refer to the voice recognition performed on the speech data to derive the transcripts for the speech data.

Optionally, the text recognition is performed on the speech data through artificial intelligence (AI) technology to obtain the above subtitle content. Optionally, the artificial intelligence technology is implemented through a machine learning model. Optionally, the machine learning model is a neural network model.

Optionally, the text recognition is performed on the speech data through a speech recognition model to obtain the subtitle content. The speech recognition model is a neural network model, and is obtained by training sample speech data labeled with subtitles. Optionally, a recognition result is output after entering the sample speech data into the speech recognition model to be trained. After the recognition result is compared with the subtitles labeled to the sample speech data, a model parameter of the speech recognition model is adjusted according to a comparison result, so that training on the speech recognition model is realized.

Optionally, in the text recognition process, the text recognition is firstly performed on the speech data to obtain corresponding text content; and then, the text content is segmented by performing semantic recognition on the text content to obtain the above subtitle content.

In step 105, a target video is generated according to the video image frames, the speech data and the subtitle content.

Optionally, the collected video image frames are sequentially written into a video track to generate a video stream. The collected speech data is sequentially written into an audio track to generate an audio stream. The subtitle content is sequentially added to the video stream according to the corresponding timestamp range. The video stream and the audio stream are combined to obtain the target video.

In summary, according to the video recording method provided by the present embodiment, in the video recording operation, the subtitle content corresponding to the speech data is obtained by recognizing the speech data in real time, and is displayed as subtitles within the timestamp range corresponding to the speech data, so that a problem of a tedious subtitle generation process caused by manually entering of the subtitle content is avoided, thereby improving the subtitle generation efficiency.

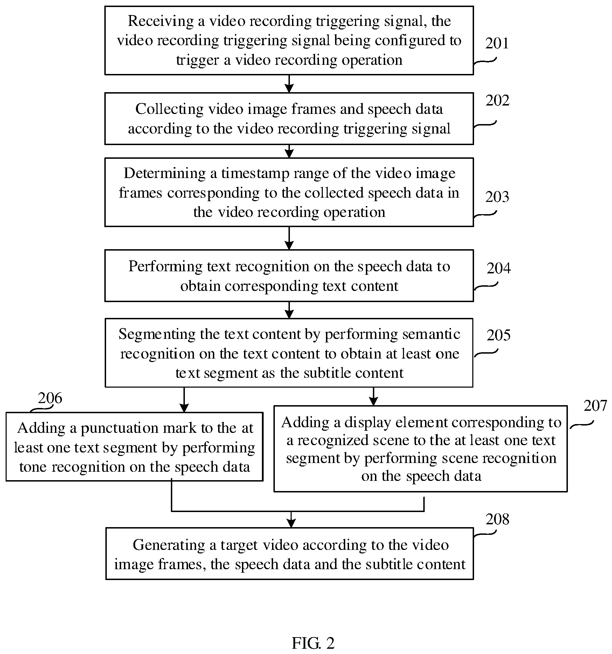

In an optional embodiment, the above speech data recognition process further includes at least one of a segmentation process, a punctuation mark addition process and a display element addition process. FIG. 2 is a flowchart of another video recording method provided by some embodiments of the present disclosure, and takes an example in which the method is applied to a terminal for illustration. As shown in FIG. 2, the method includes the following steps.

In step 201, a video recording triggering signal is received, wherein the video recording triggering signal is configured to trigger a video recording operation.

Optionally, a manner for receiving the video recording triggering signal includes at least one of the following manners.

In a first manner, camera software is installed in the terminal, and has a corresponding video recording function. In a video recording interface corresponding to the video recording function, the video recording triggering signal is generated after a shooting control is selected. Video image frames are collected through a terminal camera, and speech data is collected through a terminal microphone according to the video recording triggering signal, so that a target video is generated.

In a second manner, the terminal is provided with a screen recording function. The screen recording function corresponds to a screen recording control. When a selection operation on the screen recording control is received, the screen recording function is correspondingly enabled. That is, when the selection operation on the screen recording control is received, the video recording triggering signal is generated, and content displayed in a terminal display screen is recorded according to the video recording triggering signal.

In step 202, video image frames and speech data are collected according to the video recording triggering signal.

Optionally, when the video recording triggering signal is a signal triggered in the camera software, the video image frames are collected through a camera and the speech data is collected through a microphone according to the video recording triggering signal.

Optionally, when the video recording triggering signal is a signal triggered by the screen recording function, the display content in the terminal display screen is acquired as the video image frames according to the video recording triggering signal, and audio playing content corresponding to the display content is acquired as the speech data.

In step 203, a timestamp range of the video image frames corresponding to the collected speech data is determined in the video recording operation.

In step 204, text recognition is performed on the speech data to obtain corresponding text content.

Optionally, the above speech recognition model includes a text recognition model. The text recognition is performed on the speech data through the text recognition model to obtain the text content. The text recognition model is obtained by training sample speech data labeled with text data. In the training process, a text recognition result is output after entering the sample speech data to the text recognition model to be trained. After the text recognition result is compared with the text data labeled to the sample speech data, a model parameter of the text recognition model is adjusted according to a comparison result, so that training on the text recognition model is realized.

In step 205, the text content is segmented by performing the semantic recognition on the text content to obtain at least one text segment as the subtitle content.

Optionally, the text content is segmented according to semantics of the speech data. When recognizing the semantics of the speech data, the semantics may be directly recognized on the basis of the speech data. Or, after the text content is recognized, the semantic recognition is performed on the text content. Thereby the text content is segmented.

Optionally, in the present embodiment, an example in which the semantic recognition is performed on the basis of the text content is taken for illustration. The above speech recognition model further includes a semantic recognition model. After the semantic recognition is performed on the text content through the semantic recognition model, the text content is segmented. The semantic recognition model is obtained by training sample text content labeled with a segmentation manner. In the training process, a segmentation result is output after entering the sample text content to the semantic recognition model to be trained. After the segmentation result is compared with the segmentation manner labeled to the sample text content, a model parameter of the semantic recognition model is adjusted according to a comparison result, so that training on the semantic recognition model is realized.

In step 206, a punctuation mark is added to the at least one text segment by performing tone recognition on the speech data.

Optionally, after the tone recognition is performed on the speech data, the punctuation mark is added to the at least one text segment according to the recognized tone. Recognizable tones include at least one of the followings: first, a statement tone corresponding to a full stop; second, a question tone corresponding to a question mark; third, an exclamatory tone corresponding to an exclamation mark; fourth, a hesitant tone corresponding to ellipsis; fifth, an interval tone corresponding to a comma; and sixth, a quoted tone corresponding to a quotation mark.

Optionally, the above speech recognition model further includes a tone recognition model. The punctuation mark is added to the at least one text segment after the tone recognition model recognizes the tone of the speech data. The tone recognition model is obtained by training sample speech data labeled with a punctuation mark addition manner. In the training process, a punctuation mark addition result is output after entering the sample speech data to the tone recognition model to be trained. After the punctuation mark addition result is compared with the punctuation mark addition manner labeled to the sample speech data, a model parameter of the tone recognition model is adjusted according to a comparison result, so that training on the tone recognition model is realized.

In step 207, a display element corresponding to a recognized scene is added to the at least one text segment by performing scene recognition on the speech data.

Optionally, the display element includes at least one of an emoticon, an emoji, a kaomoji and an image.

Optionally, the scene recognition may be performed through keyword recognition of the text content, or may be recognized by the scene recognition model.

In step 208, a target video is generated according to the video image frames, the speech data and the subtitle content.

Optionally, the collected video image frames are sequentially written into a video track to generate a video stream. The collected speech data is sequentially written into an audio track to generate an audio stream. The subtitle content is sequentially added to the video stream according to the corresponding timestamp range. The video stream and the audio stream are combined to obtain the target video.

In summary, according to the video recording method provided by the present embodiment, in the video recording operation, the subtitle content corresponding to the speech data is obtained by recognizing the speech data in real time, and is displayed as subtitles within the timestamp range corresponding to the speech data, so that a problem of a tedious subtitle generation process caused by manually entering of the subtitle content is avoided, thereby improving the subtitle generation efficiency.

According to the video recording method provided by the present embodiment, in the video recording operation, the speech data is recognized in real time; the text content is segmented by performing the semantic recognition on the text content to obtain the at least one text segment; and the punctuation mark is added to the at least one text segment. Thus, the accuracy and richness of the recognition of the speech data are improved, improving the subtitle adding efficiency.

According to the video recording method provided by the present embodiment, in the video recording operation, the speech data is recognized in real time; the text content is segmented by performing the scene recognition on the speech data to obtain the at least one text segment; and the display element such as an emoticon is added to the at least one text segment. Thus, the accuracy and richness of the recognition of the speech data are improved, improving the subtitle adding efficiency.

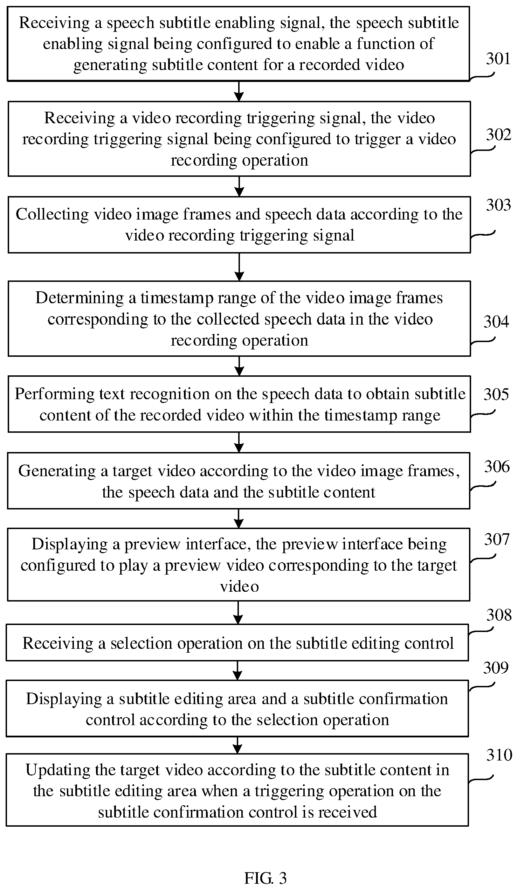

In an optional embodiment, the above subtitle content may further be modified by editing. FIG. 3 is a flowchart of a video recording method provided by some embodiments of the present disclosure, and takes an example in which the method is applied to a terminal for illustration. As shown in FIG. 3, the method includes the following steps.

In step 301, a speech subtitle enabling signal is received, wherein the speech subtitle enabling signal is configured to enable a function of generating subtitle content for a recorded video.

Optionally, the terminal is provided with a video recording function, and the video recording function has a corresponding speech subtitle sub-function. When the speech subtitle sub-function is enabled, the speech subtitle enabling signal is generated.

In step 302, a video recording triggering signal is received, wherein the video recording triggering signal is configured to trigger a video recording operation.

Optionally, a manner for receiving the video recording triggering signal includes at least one of the followings.

In a first manner, camera software is installed in the terminal, and has the corresponding video recording function. In a video recording interface corresponding to the video recording function, the video recording triggering signal is generated after a shooting control is selected. Video image frames are collected through a terminal camera, and speech data is collected through a terminal microphone according to the video recording triggering signal, so that a target video is generated.

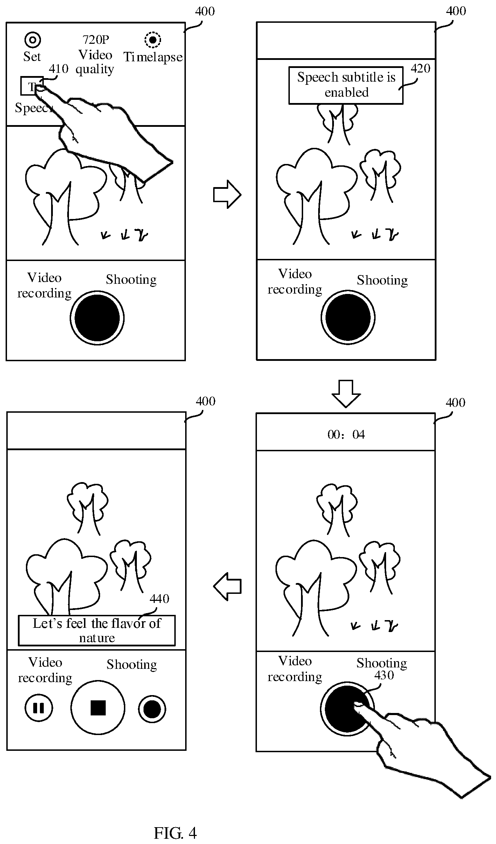

Illustratively, referring to FIG. 4, an example in which the camera software enables the speech subtitle sub-function is taken for illustration. As shown in FIG. 4, a speech subtitle enabling control 410 is displayed on a camera software interface 400. A prompt message 420 is displayed on the camera software interface 400 when a triggering operation on the speech subtitle enabling control 410 is received, and is configured to prompt a user that the speech subtitle sub-function is enabled. Shooting of the target video is started when a click operation on the shooting control 430 is received, and the subtitle content 440 is generated in real time according to the speech data during the shooting process.

In a second manner, the terminal is provided with a screen recording function. The screen recording function corresponds to a screen recording control. When a selection operation on the screen recording control is received, the screen recording function is correspondingly enabled. That is, when the selection operation on the screen recording control is received, the video recording triggering signal is generated, and content displayed in a terminal display screen is recorded according to the video recording triggering signal.

In step 303, video image frames and speech data are collected according to the video recording triggering signal.

Optionally, when the video recording triggering signal is a signal triggered in the camera software, the video image frames are collected through a camera and the speech data is collected through a microphone according to the video recording triggering signal.

Optionally, when the video recording triggering signal is a signal triggered by the screen recording function, the display content in the terminal display screen is acquired as the video image frames according to the video recording triggering signal, and audio playing content corresponding to the display content is acquired as the speech data.

In step 304, a timestamp range of the video image frames corresponding to the collected speech data is determined in the video recording operation.

In step 305, text recognition is performed on the speech data to obtain subtitle content of a recorded video within the timestamp range.

Optionally, the text recognition is performed on the speech data through artificial intelligence (AI) technology to obtain the above subtitle content. Optionally, the artificial intelligence technology is implemented through a machine learning model. Optionally, the machine learning model is a neural network model.

In step 306, a target video is generated according to the video image frames, the speech data and the subtitle content.

Optionally, the collected video image frames are sequentially written into a video track to generate a video stream. The collected speech data is sequentially written into an audio track to generate an audio stream. The subtitle content is sequentially added to the video stream according to the corresponding timestamp range. The video stream and the audio stream are combined to obtain the target video.

In step 307, a preview interface is displayed, wherein the preview interface is configured to play a preview video corresponding to the target video.

Optionally, the subtitle content is displayed on the video image frames in an overlapping manner when the preview video is played to the video image frames within the timestamp range.

In step 308, a selection operation on a subtitle editing control is received.

Optionally, the preview interface includes the subtitle editing control which is configured to enable a subtitle editing function.

In step 309, a subtitle editing area and a subtitle confirmation control are displayed according to the selection operation.

Optionally, the subtitle editing area displays a subtitle editing sub-area corresponding to at least one video segment corresponding to the preview video, wherein subtitle content corresponding to the video segment is edited in the subtitle editing sub-area.

In step 310, the target video is updated according to the subtitle content in the subtitle editing area when a triggering operation on the subtitle confirmation control is received.

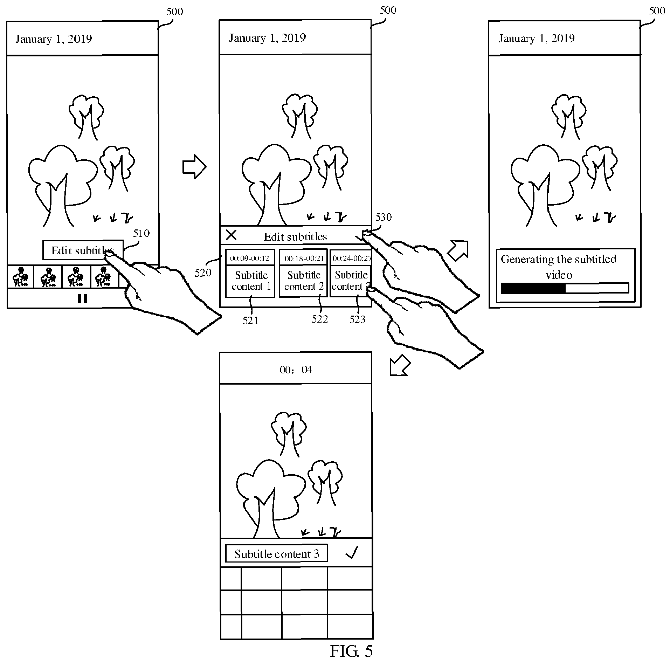

Illustratively, referring to FIG. 5, a preview video corresponding to the target video is played in a preview interface 500 of the target video. The preview interface 500 further includes a subtitle editing control 510. When the selection operation on the subtitle editing control 510 is received, the subtitle editing area 520 and the subtitle confirmation control 530 are displayed. The subtitle editing area 520 includes subtitle editing sub-areas corresponding to at least one video segment. As shown in FIG. 5, the subtitle editing area 520 includes subtitle editing sub-areas 521, 522 and 523. The subtitle editing sub-area 521 corresponds to the preview video from 00:09 to 00:12; the subtitle editing sub-area 522 corresponds to the preview video from 00:18 to 00:21; and the subtitle editing sub-area 523 corresponds to the preview video from 00:24 to 00:27. The subtitle content is edited in the above subtitle editing sub-areas. As shown in FIG. 5, the subtitle content from 00:09 to 00:12 is edited in the subtitle editing sub-area 521; the subtitle content from 00:18 to 00:21 is edited in the subtitle editing sub-area 522; and the subtitle content from 00:24 to 00:27 is edited in the subtitle editing sub-area 523. When the triggering operation on a subtitle confirmation control 530 is received, the target video is updated according to the subtitle content in the subtitle editing area.

In summary, according to the video recording method provided by the present embodiment, in the video recording operation, the subtitle content corresponding to the speech data is obtained by recognizing the speech data in real time, and is displayed as subtitles within the timestamp range corresponding to the speech data, so that a problem of a tedious subtitle generation process caused by manually entering of the subtitle content is avoided, thereby improving the subtitle generation efficiency.

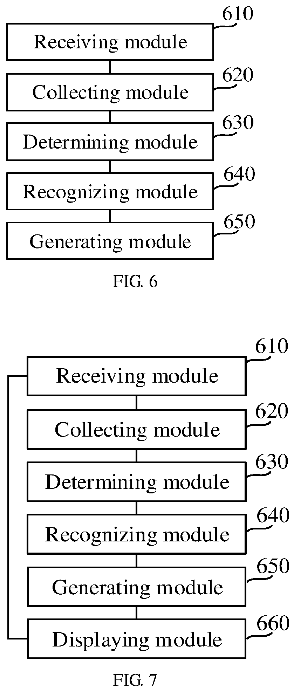

FIG. 6 is a schematic structural diagram of a video recording apparatus according to some embodiments of the present disclosure. As shown in FIG. 6, the apparatus includes a receiving module 610, a collecting module 620, a determining module 630, a recognizing module 640 and a generating module 650.

The receiving module 610 is configured to receive a video recording triggering signal which is configured to trigger a video recording operation.

The collecting module 620 is configured to collect video image frames and speech data according to the video recording triggering signal.

The determining module 630 is configured to determine a timestamp range of the video image frames corresponding to the collected speech data in the video recording operation.

The recognizing module 640 is configured to perform text recognition on the speech data to obtain subtitle content of a recorded video within the timestamp range.

The generating module 650 is configured to generate a target video according to the video image frames, the speech data and the subtitle content.

In an optional embodiment, the recognizing module 640 is further configured to perform the text recognition on the speech data to obtain corresponding text content, and to segment the text content by performing semantic recognition on the text content to obtain the subtitle content.

In an optional embodiment, the recognizing module 640 is further configured to segment the text content by performing the semantic recognition on the text content to obtain at least one text segment, and to add a punctuation mark to the at least one text segment by performing tone recognition on the speech data.

In an optional embodiment, the recognizing module 640 is further configured to add a display element corresponding to a recognized scene to the at least one text segment by performing scene recognition on the speech data.

In an optional embodiment, as shown in FIG. 7, the apparatus further includes a displaying module 660.

The displaying module 660 is configured to display a preview interface, wherein the preview interface is configured to play a preview video corresponding to the target video, and the subtitle content is displayed on the video image frames in an overlapping manner when the preview video is played to the video image frames within the timestamp range.

In an optional embodiment, the preview interface further includes a subtitle editing control.

The receiving module 610 is further configured to receive a selection operation on the subtitle editing control.

The displaying module 660 is further configured to display a subtitle editing area and a subtitle confirmation control according to the selection operation, wherein the subtitle editing area displays a subtitle editing sub-area corresponding to at least one video segment corresponding to the preview video, and subtitle content corresponding to the video segment is edited in the subtitle editing sub-area.

The receiving module 610 is further configured to update the target video according to the subtitle content in the subtitle editing area when a triggering operation on the subtitle confirmation control is received.

In an optional embodiment, the collecting module 620 is further configured to collect the video image frames through a camera and collect the speech data through a microphone according to the video recording triggering signal.

In an optional embodiment, the collecting module 620 is further configured to acquire display content of a terminal display screen as the video image frames according to the video recording triggering signal, and acquire audio playing content corresponding to the display content as the speech data.

In an optional embodiment, the receiving module 610 is further configured to receive a speech subtitle enabling signal, wherein the speech subtitle enabling signal is configured to enable a function of generating the subtitle content for the recorded video.

In summary, according to the video recording apparatus provided by the present embodiment, in the video recording operation, the subtitle content corresponding to the speech data is obtained by recognizing the speech data in real time, and is displayed as subtitles within the timestamp range corresponding to the speech data, so that a problem of a tedious subtitle generation process caused by manually entering of the subtitle content is avoided, thereby improving the subtitle generation efficiency.

It should be noted that the video recording apparatus provided by the above embodiments only takes division of all the functional modules as an example for explanation. In practice, the above functions can be finished by the different functional modules as required. That is, the internal structure of the device is divided into different functional modules to finish all or part of the functions described above. In addition, the video recording apparatus provided by the above embodiments has the same concept as the video recording method embodiments. Refer to the method embodiment for the specific implementation process of the device, which will not be repeated herein.

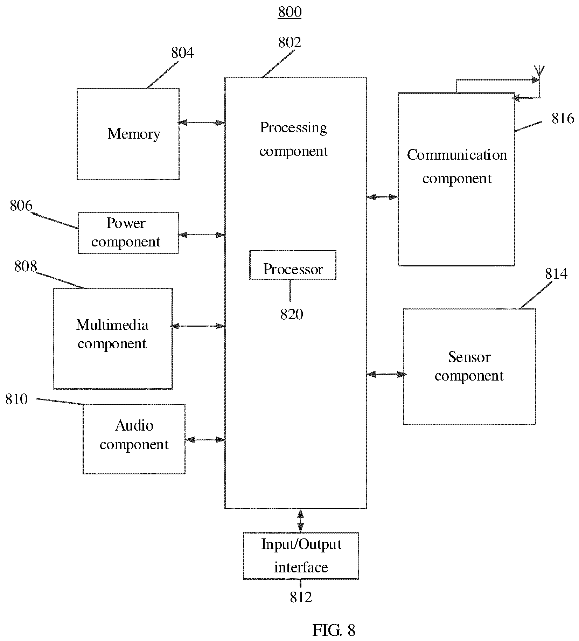

FIG. 8 is a block diagram of a computer device 800 according to some embodiments of the present disclosure. For example, the computer device 800 may be a terminal described as above. For example, the terminal may be a mobile phone, a tablet computer, an electronic book reader, a multimedia player, a personal computer (PC), a wearable device or other electronic devices.

Referring to FIG. 8, the computer device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the computer device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the computer device 800. Examples of such data include instructions for any applications or methods operated on the computer device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the computer device 800. The power component 806 may include a power management system, one or more power sources, and any other components associated with the generation, management, and distribution of power in the computer device 800.

The multimedia component 808 includes a screen providing an output interface between the terminal device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the computer device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the computer device 800. For instance, the sensor component 814 may detect an open/closed status of the computer device 800, relative positioning of components, e.g., the display and the keypad, of the computer device 800, a change in position of the computer device 800 or a component of the computer device 800, a presence or absence of user contact with the computer device 800, an orientation or an acceleration/deceleration of the computer device 800, and a change in temperature of the computer device 800. The sensor component 814 may include a proximity sensor configured to detect the presence of nearby objects without any physical contact. The sensor component 814 may also include a light sensor, such as a complementary metal oxide semiconductor (CMOS) or charge-coupled device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the computer device 800 and other devices. The computer device 800 can access a wireless network based on a communication standard, such as WiFi, 2G, 3G, 4G or 5G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications.

In exemplary embodiments, the computer device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components to execute the above video recording method.

In exemplary embodiments, there is also provided a non-transitory computer readable storage medium storing a computer program. When the computer program is executed by the processor of the computer device 800, the computer device 800 can realize the above video recording method. For example, the non-transitory computer-readable storage medium may be a ROM, a RAM, a CD-ROM, a magnetic tape, a floppy disc, an optical data storage device, or the like.

Some embodiments of the present disclosure further provide a computer device including a memory and a processor. At least one instruction, at least one program and a code set or an instruction set are stored in the memory, and may be loaded and executed by a processor to realize the above video recording method.

Some embodiments of the present disclosure further provide a computer-readable storage medium. At least one instruction, at least one program and a code set or an instruction set are stored in the storage medium, and may be loaded and executed by a processor to realize the above video recording method.

The present disclosure further provides a computer program product. When the computer program product runs in a computer, the computer can execute the above video recording method described in the above method embodiments.

Understandably, the term "plurality" herein refers to two or more. "And/or" herein describes the correspondence of the corresponding objects, indicating three kinds of relationship. For example, A and/or B, can be expressed as: A exists alone, A and B exist concurrently, B exists alone. The character "/" generally indicates that the context object is an "OR" relationship.

Other embodiments of the present disclosure can be available to those skilled in the art upon consideration of the specification and practice of the invention disclosed herein. The present application is intended to cover any variations, uses, or adaptations of the present disclosure following general principles of the present disclosure and include the common general knowledge or conventional technical means in the art without departing from the present disclosure. The specification and examples can be shown as illustrative only.

It will be appreciated that the present disclosure is not limited to the exact construction that has been described above and illustrated in the accompanying drawings, and that various modifications and changes can be made without departing from the scope thereof.

## Claims

1. A video recording method, **characterized in that**, the method comprises:
receiving (101, 201, 302) a video recording triggering signal, the video recording triggering signal being configured to trigger a video recording operation;
collecting (102, 202, 303) video image frames and speech data according to the video recording triggering signal;
determining (103, 203, 304) a timestamp range of the video image frames corresponding to the collected speech data in the video recording operation;
performing (104, 305) text recognition on the speech data to obtain subtitle content of a recorded video within the timestamp range; and
generating (105, 208, 306) a target video according to the video image frames, the speech data and the subtitle content.

2. The method according to claim 1, **characterized in that**, the performing (104, 305) the text recognition on the speech data to obtain the subtitle content of the recorded video within the timestamp range comprises:
performing (204) the text recognition on the speech data to obtain corresponding text content; and
segmenting the text content by performing semantic recognition on the text content to obtain the subtitle content; wherein
the segmenting the text content by performing the semantic recognition on the text content to obtain the subtitle content preferably comprises:
segmenting (205) the text content by performing the semantic recognition on the text content to obtain at least one text segment as the subtitle content; and
adding (206) a punctuation mark to the at least one text segment by performing tone recognition on the speech data.

3. The method according to claim 2, **characterized in that**, after segmenting (205) the text content by performing the semantic recognition on the text content to obtain the at least one text segment, the method further comprises:
adding (207) a display element corresponding to a recognized scene to the at least one text segment by performing scene recognition on the speech data.

4. The method according to any one of claims 1 to 3, **characterized in that**, after generating (105, 208, 306) the target video according to the video image frames, the speech data and the subtitle content, the method further comprises:
displaying (307) a preview interface, wherein the preview interface is configured to play a preview video corresponding to the target video, and the subtitle content is displayed on the video image frames in an overlapping manner when the preview video is played to the video image frames within the timestamp range.

5. The method according to claim 4, **characterized in that**, the preview interface further comprises a subtitle editing control; and
the method further comprises:
receiving (308) a selection operation on the subtitle editing control;
displaying (309) a subtitle editing area and a subtitle confirmation control according to the selection operation, wherein the subtitle editing area displays a subtitle editing sub-area corresponding to at least one video segment corresponding to the preview video, and subtitle content corresponding to the video segment is edited in the subtitle editing sub-area; and
updating (310) the target video according to the subtitle content in the subtitle editing area when a triggering operation on the subtitle confirmation control is received.

6. The method according to any one of claims 1 to 3, **characterized in that**, the collecting (102, 202, 303) the video image frames and the speech data according to the video recording triggering signal comprises:
collecting the video image frames through a camera and collecting the speech data through a microphone according to the video recording triggering signal; or
acquiring display content of a terminal display screen as the video image frames according to the video recording triggering signal; and acquiring audio playing content corresponding to the display content as the speech data.

7. The method according to any one of claims 1 to 3, **characterized in that**, before receiving (101, 201, 302) the video recording triggering signal, the method further comprises:
receiving (301) a speech subtitle enabling signal, the speech subtitle enabling signal being configured to enable a function of generating the subtitle content for the recorded video.

8. A video recording apparatus, **characterized in that**, the method comprises:
a receiving module (610) configured to receive a video recording triggering signal, the video recording triggering signal being configured to trigger a video recording operation;
a collecting module (620) configured to collect video image frames and speech data according to the video recording triggering signal;
a determining module (630) configured to determine a timestamp range of the video image frames corresponding to the collected speech data in the video recording operation;
a recognizing module (640) configured to perform text recognition on the speech data to obtain subtitle content of a recorded video within the timestamp range; and
a generating module (650) configured to generate a target video according to the video image frames, the speech data and the subtitle content.

9. The apparatus according to claim 8, **characterized in that**, the recognizing module (640) is further configured to perform the text recognition on the speech data to obtain corresponding text content, and segment the text content by performing semantic recognition on the text content to obtain the subtitle content; wherein
the recognizing module (640) is preferably further configured to segment the text content by performing the semantic recognition on the text content to obtain at least one text segment as the subtitle content, and to add a punctuation mark to the at least one text segment by performing tone recognition on the speech data.

10. The apparatus according to claim 9, wherein the recognizing module (640) is further configured to add a display element corresponding to a recognized scene to the at least one text segment by performing scene recognition on the speech data.

11. The apparatus according to any one of claims 8 to 10, **characterized in that**, the method further comprises:
a displaying module (660) configured to display a preview interface, wherein the preview interface is configured to play a preview video corresponding to the target video, and the subtitle content is displayed on the video image frames in an overlapping manner when the preview video is played to the video image frames within the timestamp range.

12. The apparatus according to claim 11, **characterized in that**, the preview interface further comprises a subtitle editing control;
the receiving module (610) is further configured to receive a selection operation on the subtitle editing control;
the displaying module (660) is further configured to display a subtitle editing area and a subtitle confirmation control according to the selection operation, wherein the subtitle editing area displays a subtitle editing sub-area corresponding to at least one video segment corresponding to the preview video, and subtitle content corresponding to the video segment is edited in the subtitle editing sub-area; and
the receiving module (610) is further configured to update the target video according to the subtitle content in the subtitle editing area when a triggering operation on the subtitle confirmation control is received.

13. The apparatus according to any one of claims 8 to 10, **characterized in that**,
the collecting module (620) is further configured to collect the video image frames through a camera and collect the speech data through a microphone according to the video recording triggering signal; or
the collecting module (620) is further configured to acquire display content of a terminal display screen as the video image frames according to the video recording triggering signal, and acquire audio playing content corresponding to the display content as the speech data; or
the receiving module (610) is further configured to receive a speech subtitle enabling signal, the speech subtitle enabling signal being configured to enable a function of generating the subtitle content for the recorded video.

14. A computer device, comprising: a processor (820) and a memory (804), wherein the memory (804) stores at least one instruction which is loaded and executed by the processor (820) to implement the video recording method according to any one of claims 1 to 7.

15. A computer-readable storage medium, wherein the storage medium stores at least one instruction which is loaded and executed by a processor to implement the video recording method according to any one of claims 1 to 7.
